# DEMANDE DE BREVET EUROPEEN

(11) **EP 2 113 361 A1**
(43) Date de publication de la demande: **04.11.2009**
(21) Numéro de dépôt: 08290409.5
(22) Date de dépôt: 29.04.2008
(51) Int. Cl.: B29C 45/32

(54) **Dispositif et procédé de production de récipients de faible conicité**

(71) Demandeur: Plastic System Packaging, 36210 Chabris (FR); Caulonque S.A., 401470 Soustons (FR)
(72) Inventeur: Vignacq, Philippe, 40140 Soustons (FR); Poussard, Jean-Claude, 41200 Romorantin Lanthenay (FR)
(74) Mandataire: Debay, Yves

(57) **Abrégé**

La présente invention concerne un dispositif permettant la production de gobelets en utilisant la technique In-Mould Labelling, le dispositif comprenant au moins une paire d'une partie femelle et une paire d'une partie mâle du moule du produit, chaque paire d'élément du moule étant positionnée symétriquement par rapport au plan du support des parties mâles, une partie femelle étant positionné en vis-à-vis de chaque partie mâle, sur des ensembles d'injection respectifs positionnés vers l'extérieure de la machine, de part et d'autre de l'élément qui supporte les parties mâles, **caractérisé en ce que,** la distribution de matière entre les blocs-chauds étant réalisée par une canalisation appelée cheminée de distribution positionnée perpendiculairement au plan de la structure de support des parties mâles, cette cheminée étant divisée en plusieurs segments qui reforment l'intégralité de la cheminée en même temps que les parties mâles et femelles de chaque moule se rejoignent pour refermer le moule.

## Description

La présente invention se rapporte au domaine des dispositifs de moulage et d'étiquetage de contenant et plus particulièrement aux dispositifs de moulage et d'étiquetage faisant intervenir le procédé « In-Mould Labelling ».

La technique « In-Mould Labelling », dite I.M.L., est une technologie répandue destinée à décorer ou étiqueter des produits en plastique au cours de leur réalisation. Cette technique se base sur la combinaison des procédés de décoration et de moulage et permet de réduire à la fois la durée et le coût de la fabrication du produit.

La réalisation du procédé I.M.L. fait intervenir d'une part un dispositif de moulage du produit à fabriquer et d'autre part un dispositif pour le positionnement des étiquettes ou des éléments de décoration sur une des faces internes du moule, situé à proximité du dispositif de moulage. Le positionnement des éléments de décoration fait généralement intervenir un mécanisme basé sur l'utilisation de l'électricité statique. En effet, les étiquettes sont chargées électriquement lors de leur transfert dans le dispositif de moulage de sorte qu'une fois déposée dans le moule, l'étiquette vient se fixer en s'accolant elle-même sur la paroi du moule. D'autres mécanismes de positionnement faisant intervenir des dispositifs d'aspiration sont connus.

Les étiquettes utilisées sont généralement en papier ou dans un plastique (polypropylène ou polystyrène) similaire au produit à mouler.

Une fois l'étiquette positionnée, un mélange de composé (polyéthylènes polypropylènes ou autres copolymères) est injectée sous forme pâteuse dans le moule, puis, une fois refroidi, le produit étiqueté-moulé est retiré du moule par un dispositif habituel.

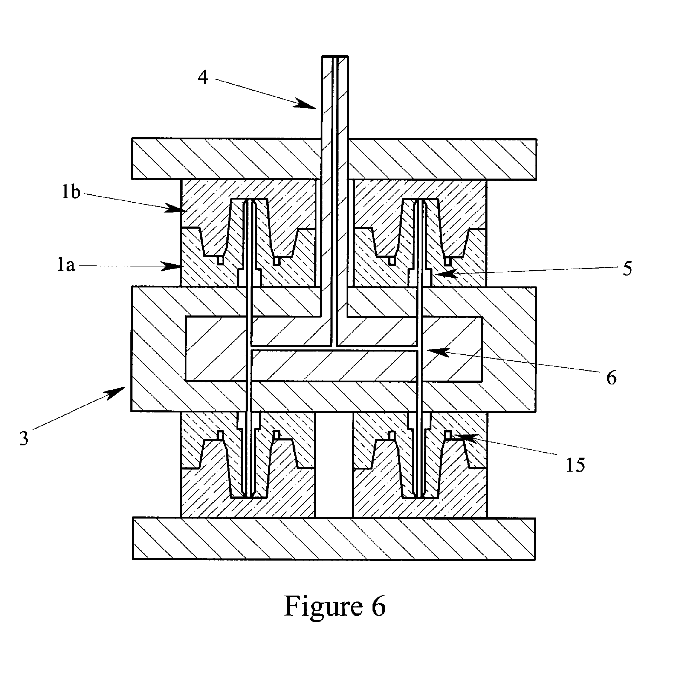

Dans le cas de production de récipient présentant un fond étroit, il est courant d'utiliser un dispositif de moulage tel que celui de la figure 6 comprenant un ensemble de moules disposés symétriquement par rapport à un plan formant un ensemble d'injection, alimenté par une cheminée d'alimentation orientée selon un axe perpendiculaire à l'ensemble d'injection. Chaque moule d'un récipient est formé d'une part par une partie de moule mâle appelée poinçon et d'autre part par une partie de moule femelle appelée matrice. L'ensemble d'injection forme alors le support sur lequel les parties mâles des moules sont disposées de chaque coté, symétriquement par rapport au plan de symétrie de l'ensemble d'injection. En regard de chacune de ces parties mâles se trouve une partie femelle supporté par une structure disposée parallèlement au plan du bloc chaud. L'injection de matière dans chacun des moules, formés respectivement par une partie mâle et une partie femelle, est réalisée par une busette disposée dans la profondeur du poinçon qui assure, depuis le conduit d'alimentation au milieu de l'ensemble d'injection jusqu'à la surface du poinçon située dans le fond du produit moulé, la diffusion du mélange de polymères dans le moule. Lors de l'ouverture du moule, le produit nouvellement moulé est positionné sur le poinçon, le démoulage s'effectue alors grâce à une bague mobile d'éjection qui entoure le poinçon et escamotée, au cours du moulage, dans une gouttière annulaire. Cette bague d'éjection permet de démouler le récipient produit du poinçon en exerçant une pression sur le bord du récipient.

Un tel dispositif présente plusieurs inconvénients importants. Un premier d'entre eux concerne l'usure de la partie mâle du moule par la bague d'éjection qui frotte lors de chaque étape de démoulage du récipient produit. Pour contourner ce problème, l'utilisation d'un dispositif d'éjection par gaz disposé dans l'épaisseur du poinçon, parallèlement à la busette d'alimentation en matière moulable permet de démouler le récipient sans utilisation d'une bague, cependant, pour des problèmes d'espace, un tel dispositif n'est pas réalisable dans le cas de production de récipient présentant un fond étroit et une fable conicité. Par ailleurs, la présence de la busette dans la partie mâle du moule a pour effet d'augmenter la température du moule et donc d'augmenter le temps de refroidissement du récipient en cours de moulage puisque le recipient reste sur le poinçon lors de l'ouverture du moule. Face à une telle situation, la solution consisterait à inverser respectivement les parties de moules, mâles et femelles. Mais cette solution n'est pas envisageable car il est nécessaire pour le positionnement des étiquettes dans les moules que les parties femelles des moules soient situées sur les bords extérieurs du dispositif.

La présente invention a pour objet de palier un ou plusieurs inconvénients de l'art antérieur et notamment de proposer un dispositif de production de récipients à fond étroit et avec une faible conicité permettant un démoulage ne nécessitant pas un dispositif entrainant une usure du moule et permettant une étape de refroidissement plus rapide.

Cet objectif est atteint par un dispositif permettant la production de récipients de type barquette ou gobelet permettant l'utilisation de la technique « In-Mould Labelling », le dispositif comprenant au moins une paire d'éléments de la structure qui supporte des parties femelles des moules du produit, appelés « matrices », formant la surface extérieure du produit, et au moins un élément de la structure qui supporte des parties mâles des moules, appelés « poinçons », formant la surface intérieure du produit, une matrice s'associe au poinçon en vis-à-vis pour former un moule **caractérisé en ce que** un des éléments de la structure qui supporte les parties mâles des moules, comprend au moins deux paires de poinçons positionnés d'une part symétriquement par rapport à un plan de symétrie perpendiculaire à un canal d'amenée de matière plastique, et d'autre part vers les éléments de la structure supportant les parties femelles des moules positionnées en vis-à-vis de chaque partie mâle, ces parties femelles comportant les ensembles d'injection disposés pour déboucher en vis-à-vis des parties mâles des moules, l'un des éléments de la structure étant solidaire du bâti de la machine par rapport auquel les autres éléments sont mobiles selon un axe coaxial à l'arrivée de la matière plastique et perpendiculaire au plan de symétrie de l'élément mâle de support des poinçons,
en ce que, chaque ensemble d'injection comportant au moins un moyen de distribution de type canal qui participe à la répartition de la matière dans chaque moule, par une busette d'injection située au centre de chaque moule, une autre extrémité du moyen de distribution situé dans l'ensemble d'injection étant reliée à une canalisation reliée à l'entrée de matière et appelée cheminée de distribution positionnée perpendiculairement au plan de la structure qui supporte les parties mâles, cette cheminée présentant au moins un segment associé à chaque ensemble d'injection, et arrangé pour reformer l'intégralité de la canalisation en même temps que les parties mâle et femelle d'un moule viennent se rejoindre lors de la fermeture des ensembles de moule,
en ce que l'alimentation en matière s'effectue par un point d'entrée situé au niveau d'au moins un des ensembles d'injection.

Selon une variante de l'invention, le dispositif est **caractérisé en ce que** l'élément de support formant le bâti est un ensemble d'injection par rapport auquel l'élément de support des parties mâles des moules se déplace d'un demi course, et le second ensemble d'injection se déplace d'une course complète.

Selon une autre variante de l'invention, le dispositif est **caractérisé en ce que** l'élément de support formant le bâti est l'élément de support des parties mâles des moules par rapport auquel les ensembles d'injection se déplacent symétriquement selon un même axe mais dans des directions opposées de manière à enserrer l'élément de support formant le bâti lors de la réunion des parties mâle et femelle de chaque moule.

Selon une autre variante de l'invention, le dispositif est **caractérisé en ce que** la cheminée de distribution comprend un seul segment dont une extrémité est solidarisée et communique de façon permanente avec le moyen de distribution de l'ensemble d'injection formant le bâti et dont l'autre extrémité, libre, vient communiquer avec une ouverture du moyen de distribution de l'ensemble d'injection mobile lorsque les parties mâle et femelle respectives de chaque moule viennent se rejoindre, la cheminée de distribution traversant l'élément de support des parties mâles des moules au niveau d'un orifice adapté.

Selon une autre variante de l'invention, le dispositif est **caractérisé en ce que** la cheminée comprend deux segments dont chacun présente respectivement une extrémité solidarisée et qui communique de façon permanente avec un moyen de distribution d'un des ensembles d'injection et dont les extrémités libres respectives viennent communiquer entre elles lorsque les parties mâle et femelle respectifs de chaque moule viennent se rejoindre, la cheminée de distribution traversant au moins un élément de support des parties mâles du moule au niveau d'un orifice adapté.

Selon une autre variante de l'invention, le dispositif est **caractérisé en ce que** la cheminée comprend trois segments dont un premier et un second segments présentent respectivement une extrémité solidarisée et qui communique de façon permanente avec un moyen de distribution d'un des ensembles d'injection et une extrémité libre, et dont un troisième segment est solidarisé avec l'élément de support des parties mâles des moules et présente ses extrémités libres, les extrémités libres respectives du premier et du second segment viennent alors chacune communiquer avec une extrémité différente du troisième segment lorsque les parties mâle et femelle respectifs de chaque moule viennent se rejoindre.

Selon une autre variante de l'invention, le dispositif est **caractérisé en ce que** l'élément symétrique de support de parties mâles est disposé en vis-à-vis d'un élément de support de parties femelles symétrique selon un plan parallèle au plan de symétrie de l'élément symétrique mâle de support de parties mâles, cet élément de support de parties femelles, situé du coté le plus éloigné de l'alimentation en matière, comportant un ensemble d'injection relié par une canalisation à la canalisation d'amenée de matière, la partie de l'élément symétrique de support de parties femelles située à l'opposé de l'élément mâle symétrique étant en vis-à-vis d'un élément mâle non relié à la cheminée.

Selon une autre variante de l'invention, le dispositif est **caractérisé en ce que** un des ensembles d'injection qui supporte des parties femelles, forme un élément central en présentant un plan de symétrie perpendiculaire au canal d'amenée de matière et de chaque coté duquel sont positionnés d'une part au moins un élément symétrique supportant des parties mâles de moules de part et d'autre de sa structure et d'autre part au moins un ensemble d'injection qui supporte des parties femelles de moules de sorte qu'au moins un élément symétrique de support de parties mâles soit positionné entre deux éléments de la structure qui supporte des parties femelles de moules, et en ce que la cheminée comprend au moins trois segments dont un premier et un second segments présentent respectivement une extrémité libre et une extrémité solidarisée qui communique de façon permanente avec le moyen de distribution d'un des ensembles d'injection positionné de part et d'autre de l'élément central qui forme le plan de symétrie, et dont un troisième segment d'une part présente des extrémités libres et d'autre part est solidarisé avec l'élément central de la structure pour communiquer de façon permanente avec le moyen de distribution de cet élément central, les éléments de la structure qui supportent des parties mâles de moules comprennent un orifice adapté pour être traversé par la cheminé de distribution, les extrémités libres respectives du premier et du second segment viennent alors chacune communiquer avec une extrémité différente du troisième segment lorsque les parties mâle et femelle respectives de chaque moule viennent se rejoindre.

Selon une autre variante de l'invention, le dispositif est **caractérisé en ce que** la cheminée comprend quatre ou cinq segments et qu'au moins un des éléments de support des parties mâles est traversé par un segment particulier de la cheminé avec lequel l'élément de support est solidarisé.

Selon une autre variante de l'invention, le dispositif est **caractérisé en ce que** le dispositif possède au moins un système robotisé qui comprend d'une part au moins un moyen de positionnement de l'étiquette dans la matrice du moule, le moyen de positionnement étant orienté comme les poinçons vers l'extérieur du dispositif, et d'autre part au moins un moyen de récupération, au niveau du poinçon, du produit fabriqué, le moyen de récupération étant orienté vers l'intérieur du dispositif, de sorte que lorsque le système robotisé vient se positionner entre les deux parties d'un même moule, le moyen de positionnement fait face à la matrice du moule et le moyen de récupération fait face au poinçon du moule.

Selon une autre variante de l'invention, le dispositif est **caractérisé en ce que** le moyen de positionnement de l'étiquette est formé par un élément isolant entrainé en rotation, de forme similaire au poinçon du moule, destiné à enrouler une étiquette I.M.L. provenant d'un magasin et à la charger électro-statiquement grâce à des électrodes avant de venir positionner l'étiquette dans la matrice où l'étiquette vient se coller sur la surface de la matrice du moule.

Selon une autre variante de l'invention, le dispositif est **caractérisé en ce que** le moyen de récupération du produit fabriqué au niveau du poinçon du moule est formé par des doigts de préhension qui retirent le produit fabriqué du poinçon du moule pour le déposer vers une unité de stockage.

Selon une autre variante de l'invention, le dispositif est **caractérisé en ce que** le moyen de récupération du produit fabriqué au niveau du poinçon du moule est formé par-une ventouse associée à un dispositif de succion automatisé qui retire le produit fabriqué du poinçon du moule pour le déposer vers une unité de stockage.

Selon une autre variante de l'invention, le dispositif est **caractérisé en ce que** les extrémités de chacun des segments qui assurent la jonction pour former la cheminée, sont constitués par des obturateurs qui d'une part assurent la fermeture de chacun des segments lorsque la cheminée n'est pas formée grâce à une pression pneumatique, mécanique ou hydraulique, et d'autre part s'ouvrent sous l'effet de la pression exercée par l'alimentation en matière lorsque cette pression est supérieure à la pression pneumatique de fermeture.

Selon une autre variante de l'invention, le dispositif est **caractérisé en ce que** le dispositif comprend un système permettant la formation d'un jet de gaz qui débouche au niveau du poinçon du moule, en vis-à-vis de la busette d'injection de matière, par une fente située en périphérie ou sur une face du poinçon, permettant au produit fabriqué d'être éjecté du moule.

Selon une autre variante de l'invention, le dispositif est **caractérisé en ce que** le dispositif comprend une pluralité de moules disposés par paires en étages et symétriquement par rapport à l'élément de support des éléments mâles.

Un autre objectif de l'invention est de proposer un procédé de fonctionnement du dispositif de production.

Cet objectif est atteint grâce à un procédé de production de récipients de type barquette ou gobelet faisant intervenir la technologie « In-Mould Labelling » comprenant au moins :
- une étape de chargement d'au moins une étiquette,
- une étape de positionnement d'au moins une étiquette prédécoupée ou découpée dans au moins une partie d'un moule,
- une étape d'injection d'au moins un composé dans le moule refermé,
- une étape de séparation des différentes parties du moule permettant
- une étape de démoulage d'au moins un produit moulé, le produit moulé étant alors positionné sur au moins une partie du moule,
- une étape d'évacuation d'au moins un produit moulé récupéré.
**caractérisé en ce que** le procédé comporte en outre une étape de réunion d'au moins deux parties d'un moule, cette réunion permettant la fermeture du moule et la formation de la cheminée de distribution de la matière à mouler vers les deux éléments extérieurs de la structure du dispositif portant les parties femelles des moules.

Selon une variante de l'invention, le procédé de production est **caractérisé en ce que** l'étape de démoulage d'au moins un produit moulé lors du cycle de production, s'effectue simultanément avec l'étape de positionnement d'au moins une étiquette du cycle de production suivant.

Selon une variante de l'invention, le procédé de production est **caractérisé en ce que** l'étape de positionnement d'au moins une étiquette s'effectue sur une partie du moule différente de la partie du moule où l'étape de démoulage du produit moulé est réalisée.

Selon une autre variante de l'invention, le procédé de production est **caractérisé en ce que** l'étape de positionnement d'au moins une étiquette s'effectue sur la partie du moule formant la partie femelle du moule ou matrice, l'étape de démoulage d'au moins un produit moulé se faisant sur la partie du moule formant la partie mâle ou poinçon.

Selon une autre variante de l'invention, le procédé de production est **caractérisé en ce que** l'étape de démoulage d'au moins un produit moulé comprend au moins
- une étape d'éjection du produit moulé par production d'un jet de gaz depuis la surface de la partie du moule sur laquelle est positionné le produit moulé,
- une étape de récupération du produit moulé par un dispositif de préhension adapté.

L'invention, avec ses caractéristiques et avantages, ressortira plus clairement à la lecture de la description faite en référence aux dessins annexés dans lesquels :

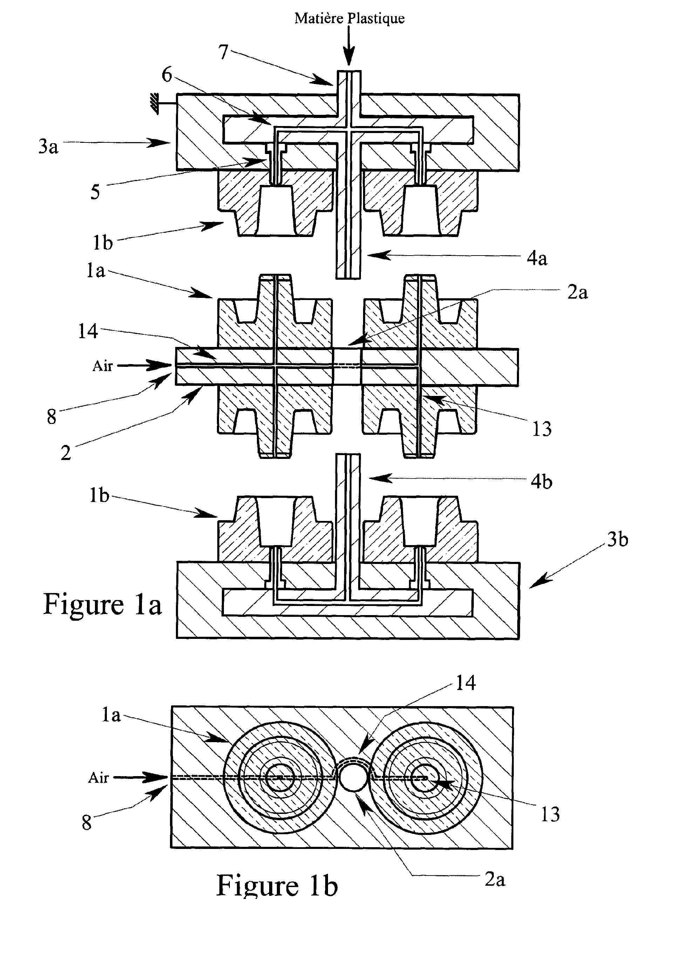

- la figure 1 a représente un dispositif de production selon l'invention, les moules étant en position ouverte, la figure 1b représentant une vue de l'élément de support des parties mâles selon un angle alternatif,

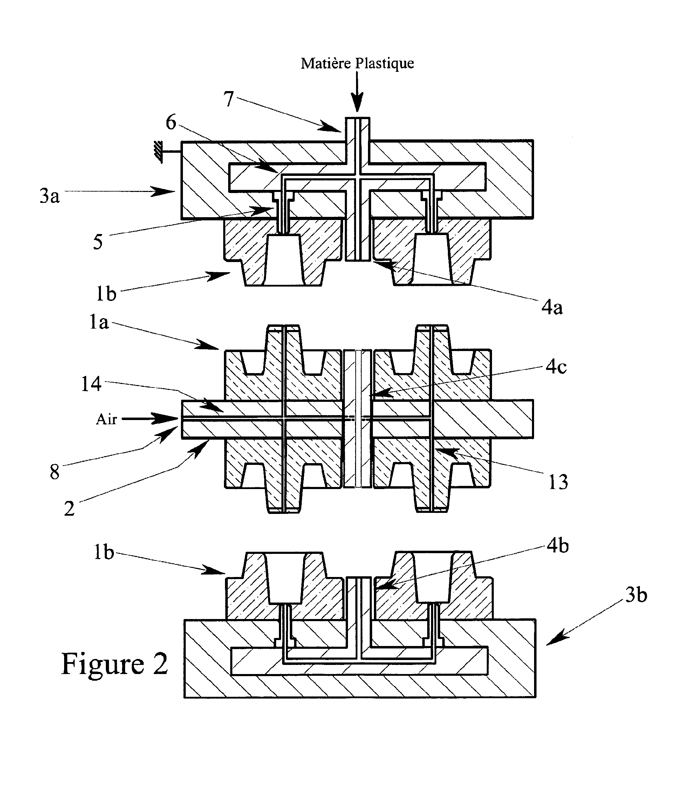

- la figure 2 représente une variante du dispositif de production selon l'invention dont la cheminé se trouve divisée en trois segments,

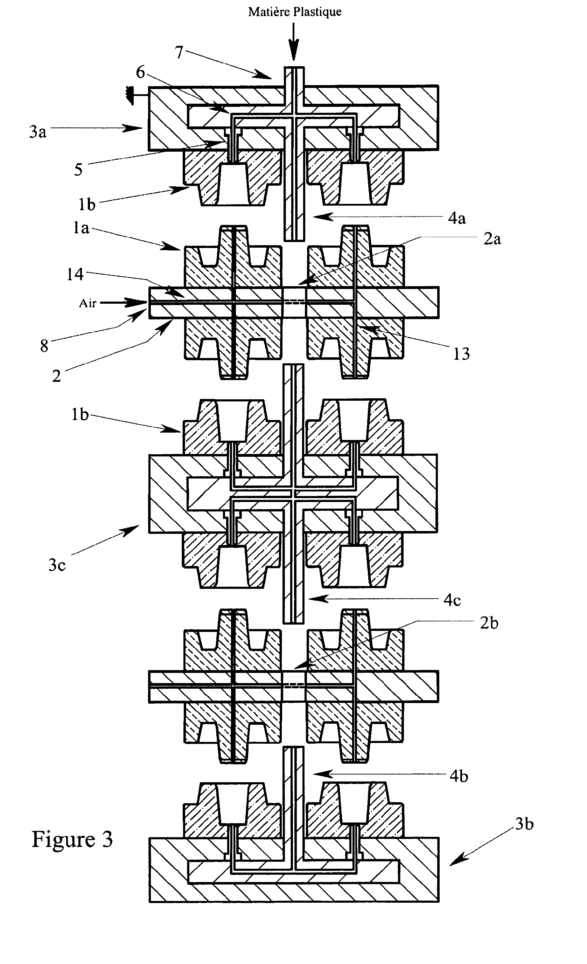

- la figure 3 représente une variante du dispositif de production selon laquelle le dispositif représenté par la figure 1 a est doublé,

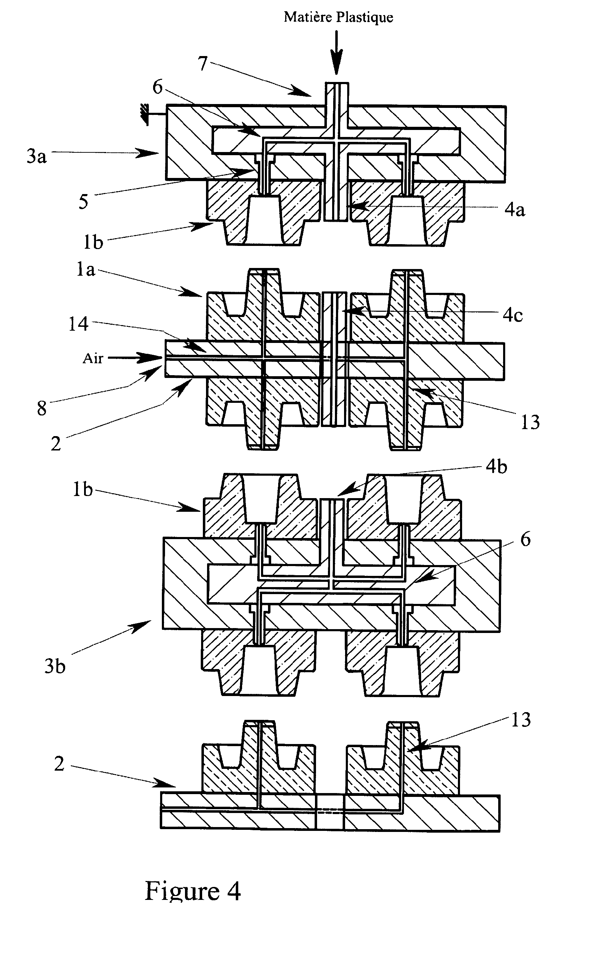

- la figure 4 représente une variante du dispositif de production selon l'invention permettant de doubler la production d'un élément d'injection,

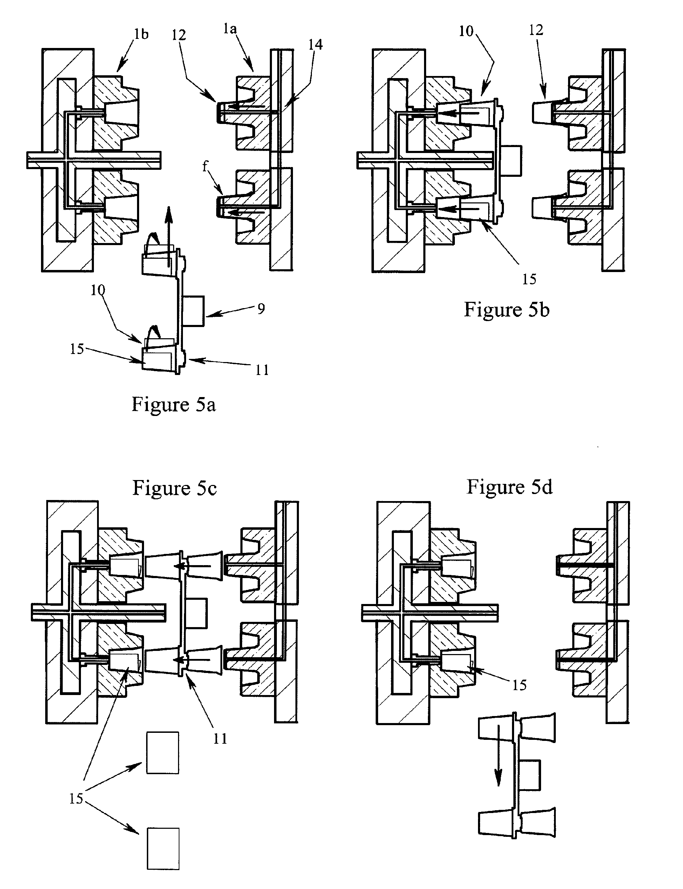

- les figures 5a à 5d représentent plusieurs étapes du cycle de production faisant intervenir un dispositif de production selon l'invention,
- la figure 6 représente un dispositif de production selon l'art antérieur, les moules étant en position fermée.

Le dispositif de l'invention est un dispositif de production de récipients (12) de type barquette ou gobelet grâce à la technologie « In Mould Labelling » permettant de produire plus particulièrement des récipients (12) étroits présentant d'une part un fond avec une faible surface et d'autre part une faible conicité. Le moulage de ces récipients (12) fait intervenir pour chaque moule (1) une partie mâle du moule dite poinçon (1a) et une partie femelle du moule (1) dite matrice (1b). Les différentes parties (1a et 1b) de ces moules (1) sont toutes réalisées dans un alliage classique d'aciérie, rigide et résistant à la chaleur, par exemple de type acier ou alliage cuivreux.

La structure du dispositif présente trois éléments de supports (2, 3a et 3b) de ces différentes parties de moules (1a et 1b). Les matrices de moules sont fixés sur deux de ces éléments de support (3a et 3b), appelés « ensembles d'injection », positionnés symétriquement de part et d'autre du troisième élément de support (2), sur les bords extérieurs de la machine. Ces différents éléments de support (2, 3a et 3b) forment ainsi trois plans disposés verticalement et parallèles entre eux. L'élément de support central (2) de la structure supporte les poinçons (1a) des moules (1) disposés symétriquement sur chacune des deux faces de l'élément de support (3). Chaque moitié de moule (1) formée par un poinçon (1a) se situe alors en regard d'une moitié de moule formée par une matrice (1b). Selon un mode de réalisation préféré, dans un même plan horizontal, quatre poinçons (1a) sont fixés par paires symétriquement sur le support central (2), deux matrices (1 b) étant alors fixées sur chacun des éléments d'injection (3a et 3b). Ceci permet une production simultanée de quatre récipients (12) à un même niveau. La superposition de ce mode de réalisation sur plusieurs niveaux formant un dispositif en étage, permet de multiplier la production de récipients (12).

Lorsque les moules sont ouverts, les deux ensembles d'injection (3a et 3b) avec les matrices (1b) des moules (1) supportées sont positionnées à distance de l'élément de support central (2) et des poinçons (1 a) des moules (1). Lors de la fermeture des moules (1), les parties respectives de chacun des moules sont réunies par un déplacement d'au moins deux des trois éléments (2, 3a et 3b) de support selon un axe perpendiculaire à leurs plans respectifs. Selon un mode de réalisation préféré, l'un des deux ensembles d'injection (3a) reste fixe avec le bâti et les deux autres éléments de support se déplacent. L'élément de support central (2) se déplace ainsi d'une demi-course par rapport à l'ensemble d'injection fixe (3a), tandis que le second ensemble d'injection (3b) se déplace d'une course entière. Dans le cas d'une variante de réalisation où l'élément de support des poinçons (1a) est l'élément fixe avec le bâti, les deux ensembles d'injection (3a et 3b) se déplacent selon un même axe mais dans des directions opposées de manière à venir presser symétriquement le support (2) des poinçons (1b). Le déplacement de ces différents éléments les uns par rapport aux autres est réalisé grâce à l'intervention d'un mécanisme hydraulique, mécanique ou pneumatique habituellement utilisé dans le domaine de l'invention.

L'alimentation en matière de chacun des moules (1) lorsque le moule est fermé et que les deux parties (1a & 1b) sont réunies, fait intervenir un dispositif formé par au moins une canalisation appelée cheminée de distribution (4), des moyens de distribution appelé conduits (6) et des busettes (5). L'arrivée de matière (7) destinée à être injectée dans les moules (1) est réalisée au niveau d'un des éléments d'injection (3a et 3b). L'injection dans chacun des moules (1) est réalisée grâce à une busette (5) positionnée dans la profondeur de chaque matrice (1b). Chaque busette (5) forme un conduit qui présente une première extrémité en communication avec un conduit de distribution (6) disposé dans l'épaisseur de l'ensemble d'injection (3) et une seconde extrémité qui débouche dans le moule (1) au fond de la matrice (1 b). L'alimentation en matière depuis le premier ensemble d'injection où se situe l'arrivée de matière (7) vers le second ensemble d'injection est réalisée grâce à une cheminée de distribution (4). Cette cheminée de distribution (4) forme une canalisation qui relie les conduits d'alimentation des deux ensembles d'injection (3a et 3b). La cheminée (4) est orientée perpendiculairement au plan des ensembles d'injection, selon l'axe de déplacement des éléments de support. Cette cheminée (4) assure ainsi la communication entre les conduits d'alimentation des deux ensembles d'injection (3a et 3b) lorsque les moules (1) sont formés par réunion des parties respectives mâles et femelles. Cette cheminée (4) comprend un ou plusieurs segments (4a et 4b) qui sont dissociables lorsque les parties mâle (1a) et femelle (1 b) des moules (1) se séparent, et se réunissent en même temps que les moules (1) se referment.

Selon un mode de réalisation préféré, la cheminée (4) comprend deux segments alignés, de longueur identique ou différente, et fixés chacun à un ensemble d'injection (3) respectif de sorte qu'une première extrémité de chaque segment (4a et 4b) se trouve en communication avec le conduit de distribution (6) situé dans la profondeur de l'ensemble d'injection (3) et auquel elle est solidarisée. La seconde extrémité du segment est située vers l'ensemble d'injection (3) positionné symétriquement par rapport à l'élément de support (2) des poinçons (1a). Le déplacement des éléments de support permet au moules (1) de se reformer et simultanément aux extrémités libres de chacun des segments (4a et 4b) de la cheminée (4) de se rejoindre pour reformer la cheminée (4). Au niveau de l'élément de support (2) des parties mâles (1b) des moules (1), un orifice (2a) est réalisé pour permettre aux segments de la cheminée (4) de se mettre en place lors de la fermeture des moules (1). Au cours du déplacement des éléments de supports, au moins un segment de la cheminée coulisse dans cet orifice (2a).

Selon un autre mode de réalisation, la cheminée (4) ne comprend qu'un seul segment fixé à l'un des ensembles d'injection (3) et dont l'extrémité libre est destinée à venir se positionner contre un orifice du conduit de distribution du second ensemble d'injection pour permettre la communication entre ces conduit et la distribution de matière lors de la fermeture des moules (1). La cheminée (4) solidaire d'un des deux ensembles d'injection (3) coulisse à travers un orifice (2a) de l'élément de support (2) des poinçons (1a), adapté au passage d'un segment de la cheminée (4).

Selon une autre variante du mode de réalisation, la cheminée (4) de distribution est divisée en trois segments. Deux de ces segments (4a et 4b) sont solidaires d'un ensemble d'injection (3) respectif sur lequel ils sont fixés de façon similaire au mode de réalisation avec deux segments. Le troisième segment (4c) forme, lui, un conduit solidarisé à l'élément de support (2) des poinçons (1a) et positionné dans l'alignement des deux premiers segments avec chacune de ses extrémités libres. La fermeture des moules (1) entraine la formation de la cheminée (4) de distribution de sorte que les extrémités libres respectives de chacun des segments solidaires d'un ensemble d'injection (3) viennent rejoindre l'extrémité libre du segment solidaire de l'élément de support (2) des poinçons (1a).

Selon une autre variante dans la réalisation du dispositif, l'élément (2) symétrique de support de parties mâles (1a) se trouve positionné en vis-à-vis d'un élément (3b) de support de parties femelles (1 b) qui est lui aussi symétrique selon un plan de symétrie parallèle au plan de symétrie de l'élément symétrique de support mâle, et perpendiculaire à l'axe de la cheminée (4) d'amenée de matière. Cet élément symétrique (3b) de support femelle est positionné du coté le plus éloigné de l'arrivée de la matière dans la cheminée d'alimentation (4). La partie de l'élément symétrique (3b) de support femelle qui est positionné du coté opposé à l'élément symétrique (2) de support mâle se trouve en vis-à-vis d'un élément de support mâle qui n'est pas relié à la cheminée. L'élément symétrique (3b) de support femelle présente un ensemble d'injection doublé par rapport à celui d'un élément (3) de support de parties femelles (1 b) classique. Cette variante du dispositif de l'invention présente une cheminée (4) de distribution de matière qui se divise en deux ou trois segments. Dans le cas d'un mode de réalisation à deux segments, chacun des segments (4a, 4b) de la cheminée (4) est solidarisé à une de ses extrémités avec un des éléments (3) de support des parties femelles (1 b) pour communiquer avec l'ensemble d'injection de l'élément de support respectif. L'autre extrémité de ces segments (4a, 4b) est laissée libre manière à permettre à la cheminée (4) de distribution de matière d'être reformée lorsque les parties mâles et femelles des différents moules du dispositif se referment. L'élément symétrique (2) de support mâle présente alors un orifice adapté (2a) pour permettre à la cheminée (4) reformée de le traverser. Dans le cas d'une construction à trois segments, les premier et second segments (4a, 4b) sont plus courts tandis que le troisième (4c) est solidaire de l'élément mâle (2) symétrique qu'il traverse de part en part de manière à présenter ses deux extrémités libres destinées à interagir avec les extrémités libres respectives des premier et second segments (4a, 4b).

Selon une réalisation alternative du dispositif de l'invention, le dispositif comprend un élément (3c) de support de parties femelles (1 b) qui forme un élément central symétrique selon un plan de symétrie perpendiculaire à l'axe de la cheminée (4) d'amenée de matière. De part et d'autre de ce plan de symétrie, les parties femelles (1 b), supportées par l'élément (3c) central, sont disposées en vis-à-vis de parties mâles (1a) respectives et supportées par des éléments (2) symétriques de support de parties mâles (1a). Les parties mâles (1a) de chacun des éléments (2) symétriques de support, qui se situent du coté opposé à l'élément (3c) symétrique de support de parties femelles (1 b), sont disposés en vis-à-vis de parties femelles (1 b) supportées par des éléments (3a, 3b) de support de parties femelles (1b). Ainsi, deux éléments (3a, 3b) de support de parties femelles (1 b) sont disposés symétriquement par rapport à l'élément de support (3c) symétrique central. La réalisation de la cheminée (4) de distribution de cette variante du dispositif se compose alors de trois à cinq segments (4a, 4b, 4c). Dans le cas d'un mode de réalisation avec trois segments (4a, 4b, 4c), les deux premiers segments (4a, 4b) sont fixés aux ensembles d'injection (3a, 3b) comme dans le mode de réalisation décrit précédemment. Le troisième segment (4c) traverse l'élément de support (3c) symétrique central de part en part auquel il est solidarisé. De même, ce troisième segment (4c) communique avec l'ensemble d'injection de l'élément (3c) central. Lorsque la cheminée (4) se reforme lors de la fermeture des moules (1) du dispositif, la cheminée (4) reformée traverse chacun des éléments (2) symétrique de support de parties mâles (1a) au niveau d'orifices adaptés (2a, 2b). Dans le cas d'un mode de réalisation à quatre ou cinq fragments, au moins un des éléments (2) symétrique de support de parties mâles (1a) se trouve traversé de part en part par un segment de la cheminée qui lui est propre et solidaire. Ce segment présente alors deux extrémités libres destinées à rejoindre d'une part l'une des extrémités libres du troisième segment (4c) qui traverse l'élément (3c) de support symétrique central et d'autre part l'extrémité libre du premier (4a) ou du second (4b) segment.

La matière distribuée par la cheminée (4) présente une température comprise entre 150 et 350°C, il est donc nécessaire que la cheminée résiste aux fortes températures avec une dilatation maitrisée.

Les extrémités libres des segments de la cheminée (4) de distribution présentent des obturateurs qui d'une part assurent la fermeture de chacun des segments lorsque la cheminée (4) n'est pas formée grâce à une pression pneumatique, et d'autre part s'ouvrent sous l'effet de la pression exercée par l'alimentation en matière lorsque cette pression est supérieure à la pression pneumatique. La pression pneumatique est de l'ordre de 6 bars, tandis que la pression de la matière lors de l'injection est de l'ordre de 1500 bars à 2000 bars.

Le positionnement des busettes d'injection (5) au niveau de l'extrémité des matrices (1 b) du moule (1) au lieu des poinçons (1a) permet de limiter la présence des busettes (5) dans les moules (1). Ceci a pour conséquence d'éliminer la présence de busette dans les poinçons (1a) et ainsi de permettre un refroidissement plus rapide du récipient moulé. Le cycle de production se trouve alors accéléré.

Alors que les matrices ont un dispositif d'injection de matière dans leur profondeur, les poinçons présentent dans leur profondeur un dispositif de démoulage permettant la production d'un jet de gaz. Une arrivée de gaz (13) disposée dans l'épaisseur du poinçon, en face de la busette d'injection (5) disposée dans la matrice, forme un conduit qui relie un conduit de distribution (14) de gaz située dans l'épaisseur de l'élément de support (2) des poinçons (1a), l'arrivée (8) de gaz se faisant au niveau d'une ouverture (f) dans l'élément de support (2) des poinçons (1a). Le positionnement de cette arrivée de gaz (13) dans une partie du moule (1) différente de celle où se trouve positionnée la busette (5) d'injection permet un gain de place et donc un moulage facilité des récipients étroits.

Ce conduit de distribution (14) relié via leurs arrivées de gaz (13) respectives à chaque poinçon (1a) permet ainsi un démoulage simultané de tous les récipients (12) nouvellement moulés. De plus, l'utilisation d'un système d'éjection basé sur un jet de gaz évite une usure des moules (1) comme dans le cas d'une utilisation de bagues d'éjection (15) disposées autour de chaque poinçon (1a).

La technologie I.M.L. consiste à positionner une étiquette dans un moule avant que la matière n'y soit injectée. Le positionnement des étiquettes fait intervenir un système robotisé (9) qui intervient lorsque les moules (1) sont ouverts et que les poinçons (1a) et les matrices (1 b) sont séparés. Ce système robotisé (9) comprend d'une part un moyen de positionnement (10) d'une étiquette (15) dans chacune des matrices (1 b) du dispositif et un moyen de-récupération (11) de chaque récipient nouvellement moulé qui se trouve positionné sur chaque poinçon du dispositif.

Le moyen de positionnement (10) présente une forme légèrement conique ou cylindrique, sensiblement similaire à celle d'un poinçon (1b). Ce moyen (10) forme un tambour tournant, orienté vers l'extérieur et peut être entrainée en rotation de manière à pouvoir charger au moins une étiquette (15) depuis un des magasins situés sur l'extérieur de la machine en l'enroulant sur son tambour, et à pouvoir ensuite être introduit dans la matrice (1 b) lorsque le moule (1) est ouvert. Selon un mode de réalisation particulier, le moyen de positionnement (10) vient charger les étiquettes grâce à un dispositif d'aspiration. Composé d'un matériau isolant, le moyen de positionnement (10) présente aussi des électrodes avec lesquelles une charge importante est transmise à l'étiquette (15) en cours de positionnement. La charge transmise à l'étiquette peut être réglable selon le besoin. L'étiquette (15) ainsi chargée se détache du moyen de positionnement (10) isolant pour venir se plaquer, grâce à l'électricité statique, contre la paroi de la matrice (1 b).

Le moyen de récupération (11) est orienté vers l'intérieur du dispositif, de manière à pouvoir être face au poinçon (1a) lorsque le récipient (13) nouvellement produit y est récupéré. Le moyen de récupération (11) consiste en un moyen de préhension qui retire le récipient (13) du poinçon (1a) et pour le déposer au niveau d'un dispositif de stockage. Le moyen de récupération (11) peut aussi faire intervenir une ventouse associée à un dispositif de succion automatisé.

Selon un mode de réalisation préféré, le moyen de récupération (11) et le moyen de positionnement de l'étiquette (10) sont associés dans leur déplacement en étant positionné sur un même bras robotisé de sorte que l'introduction du bras robotisé entre le poinçon (1a) et la matrice (1 b) d'un moule (1) permet un positionnement simultané du moyen de positionnement (11) face à la matrice (1b) et du moyen de récupération (10) face au poinçon (1a). Selon un mode de réalisation préféré, les moyens de récupération (11) et les moyens de positionnement (10) sont associés par paire à un même bras robotisé de manière à pouvoir réaliser les mêmes opérations simultanément pour une même paire de moules situées dans un même plan d'un même coté du dispositif. Deux bras sont ainsi nécessaires pour réaliser des étapes identiques sur des moules disposés symétriquement par rapport à l'élément de support (2) des poinçons (1a). Une superposition ou une juxtaposition de ce mode de réalisation sur plusieurs niveaux formant un système robotisé en niveaux horizontaux ou verticaux peut être réalisée de la même manière que les dispositifs de production sont superposés.

Le procédé de fonctionnement est cyclique de telle manière que le système robotisé comprenant le moyen de positionnement (11) et le moyen de récupération (10) prépare le cycle suivant avant que le cycle en cours ne soit terminé. Ainsi, le procédé de fonctionnement du dispositif permettant d'utiliser la technologie « In-Mould Labelling » comprend les étapes suivantes :
- une étape de récupération d'une étiquette prédécoupée par chaque moyen de positionnement (11) depuis au moins un magasin,
- une étape de transfert d'une charge électrique sur chaque étiquette transportée par des électrodes du moyen de positionnement (11),
- une étape d'introduction d'un bras robotisé supportant le moyen de positionnement (11) et le moyen de récupération (10) entre le poinçon (1a) et la matrice (1 b) d'un même moule (1).
- une étape de positionnement par le moyen de positionnement (11) d'au moins une étiquette chargée électrostatiquement dans la matrice (1b) du moule (1),
- une étape de retrait du bras robotisé,
- une étape de réunion du poinçon (1a) et de la matrice (1b) du moule (1), cette réunion permettant la fermeture du moule (1), et la formation de la cheminée (4) de distribution de la matière à mouler vers les deux éléments (3) extérieurs de la structure du dispositif portant les parties femelles (1 b) des moules (1),
- une étape d'injection d'au moins un composé dans le moule (1) refermé,
- une étape d'ouverture du moule,
- une étape de démoulage du récipient (12) nouvellement produit par un jet de gaz, le produit moulé (13) restant positionné sur le poinçon (1 a) du moule (1),
- une étape d'introduction d'un bras robotisé supportant le moyen de positionnement (11) et le moyen de récupération (10).
- une étape de positionnement par le moyen de positionnement (11) d'au moins une étiquette chargée électrostatiquement dans la matrice (1 b) du moule (1) destiné au cycle de production suivant,
- une de récupération du produit moulé (13) par le moyen de récupération (10)
- une étape de retrait du bras robotisé,
- une étape d'évacuation du produit moulé récupéré.

Selon une variante du procédé, les étapes de récupération du produit (13) moulé et de positionnement de l'étiquette pour le cycle suivant sont effectuées simultanément.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes ;

## Revendications

**1.** Dispositif permettant la production de récipients de type barquette ou gobelet permettant l'utilisation de la technique « In-Mould Labelling », le dispositif comprenant au moins une paire d'éléments de la structure (3) qui supporte des parties femelles (1 b) des moules (1), appelés « matrices », formant la surface extérieure du produit (12), et au moins un élément de la structure (2) qui supporte des parties mâles (1a) des moules (1), appelés « poinçons », formant la surface intérieure du produit (12), une matrice (1 b) s'associant à un poinçon (1 a) en vis-à-vis pour former un moule (1)
**caractérisé en ce que** un des éléments de la structure (2) qui supporte les parties mâles (1a) des moules (1), comprend au moins deux paires de poinçons (1a) positionnés d'une part symétriquement par rapport à un plan de symétrie perpendiculaire à un canal d'amenée de matière plastique, et d'autre part vers les éléments de la structure (3) supportant les parties femelles (1 b) des moules (1) positionnées en vis-à-vis de chaque partie mâle (1a), ces parties femelles (1b) comportant des ensembles d'injection (3) disposés pour déboucher en vis-à-vis des parties mâles des moules, l'un des éléments de la structure étant solidaire du bâti de la machine par rapport auquel les autres éléments sont mobiles selon un axe coaxial à l'arrivée de la matière plastique et perpendiculaire au plan de symétrie de l'élément mâle de support des poinçons,
**en ce que,** chaque ensemble d'injection (3) comportant au moins un moyen de distribution de type canal qui participe à la répartition de la matière dans chaque moule, par une busette d'injection située au centre de chaque moule, une autre extrémité du moyen de distribution situé dans l'ensemble d'injection étant reliée à une canalisation reliée à l'entrée de matière et appelée cheminée de distribution positionnée perpendiculairement au plan de la structure qui supporte les parties mâles, cette cheminée présentant au moins un segment associé à chaque ensemble d'injection, et arrangé pour reformer l'intégralité de la canalisation en même temps que les parties mâle et femelle d'un moule viennent se rejoindre lors de la fermeture des ensembles de moule,
**en ce que** l'alimentation en matière s'effectue par un point d'entrée situé au niveau d'au moins un des ensembles d'injection.

**1.** Dispositif selon la revendication précédente, **caractérisé en ce que** l'élément de support formant le bâti est un élément d'injection (3a) par rapport auquel l'élément de support (2) des parties mâles (1a) des moules (1) se déplace d'une demi-course, et le second élément d'injection (3b) se déplace d'une course complète.

**2.** Dispositif selon la revendication 1, **caractérisé en ce que** l'élément de support formant le bâti est l'élément de support (2) des parties mâles (1a) des moules (1) par rapport auquel les éléments d'injection (3) se déplacent symétriquement selon un même axe mais dans des directions opposées de manière à enserrer l'élément de support (2) formant le bâti lors de la réunion des parties mâle (1 a) et femelle (1 b) de chaque moule (1).

**3.** Dispositif selon une des revendications précédentes, **caractérisé en ce que** la cheminée (4) de distribution comprend un seul segment dont une extrémité est solidarisée et communique de façon permanente avec le moyen de distribution (6) de l'élément d'injection (3a) formant le bâti et dont l'autre extrémité, libre, vient communiquer avec une ouverture du moyen de distribution (6) de l'éléments d'injection (3b) mobile lorsque les parties mâle (1a) et femelle (1 b) respectifs de chaque moule (1) viennent se rejoindre, la cheminée (4) de distribution traversant l'élément de support (2) des parties mâles (1 a) des moules (1) au niveau d'un orifice adapté (2a).

**4.** Dispositif selon une des revendications 1 à 3, **caractérisé en ce que** la cheminée (4) comprend deux segments (4a et 4b) dont chacun présente respectivement une extrémité solidarisée et qui communique de façon permanente avec un moyen de distribution (6) d'un des éléments d'injection (3) et dont les extrémités libres respectives viennent communiquer entre elles lorsque les parties mâle (1a) et femelle (1 b) respectifs de chaque moule (1) viennent se rejoindre, la cheminée de distribution (4) traversant au moins un élément de support (2) des parties mâles (1a) des moules (1) au niveau d'un orifice adapté.

**5.** Dispositif selon une des revendications 1 à 3, **caractérisé en ce que** la cheminée (4) comprend trois segments dont un premier et un second segments présentent respectivement une extrémité solidarisée et qui communique de façon permanente avec un moyen de distribution (6) d'un des éléments d'injection (3) et une extrémité libre, et dont un troisième segment est solidarisé avec l'élément de support (2) des parties mâles (1a) des moules (1) et présente ses extrémités libres, les extrémités libres respectives du premier et du second segment viennent alors chacune communiquer avec une extrémité différente du troisième segment lorsque les parties mâle (1a) et femelle (1 b) respectifs de chaque moule (1) viennent se rejoindre.

**6.** Dispositif selon les revendications 5 ou 6, **caractérisé en ce que** l'élément symétrique de support de parties mâles (2) est disposé en vis-à-vis d'un élément de support de parties femelles (3b) symétrique selon un plan parallèle au plan de symétrie de l'élément symétrique mâle de support de parties mâles (2), cet élément de support de parties femelles (3b), situé du coté le plus éloigné de l'alimentation en matière, comportant un ensemble d'injection relié par une canalisation (6) à la canalisation (4) d'amenée de matière, la partie de l'élément symétrique de support de parties femelles (3b) située à l'opposé de l'élément mâle symétrique étant en vis-à-vis d'un élément mâle (2) non relié à la cheminée.

**7.** Dispositif selon la revendication 1, **caractérisé en ce que** un des ensembles d'injection (3c) qui supporte des parties femelles (1b), forme un élément central en présentant un plan de symétrie perpendiculaire au canal (4) d'amenée de matière et de chaque coté duquel sont positionnés d'une part au moins un élément symétrique supportant des parties mâles (1a) de moules (1) de part et d'autre de sa structure et d'autre part au moins un ensemble d'injection (3c) qui supporte des parties femelles (1 b) de moules (1) de sorte qu'au moins un élément symétrique (2) de support de parties mâles (1a) soit positionné entre deux éléments (3) de la structure qui supporte des parties femelles (1 b) de moules (1), et **en ce que** la cheminée comprend au moins trois segments (4a, 4b, 4c) dont un premier et un second segments (4a, 4b) présentent respectivement une extrémité libre et une extrémité solidarisée qui communique de façon permanente avec le moyen de distribution (6) d'un des ensembles d'injection (3a, 3b) positionné de part et d'autre de l'élément (3c) central qui forme le plan de symétrie, et dont un troisième segment (4c) d'une part présente des extrémités libres et d'autre part est solidarisé avec l'élément central (3c) de la structure pour communiquer de façon permanente avec le moyen de distribution (6) de cet élément central, les éléments (2) de la structure qui supportent des parties mâles (1a) de moules comprennent un orifice adapté (2a, 2b) pour être traversé par la cheminé de distribution, les extrémités libres respectives du premier et du second segment (4a, 4b) viennent alors chacune communiquer avec une extrémité différente du troisième segment (4c) lorsque les parties mâle (1a) et femelle (1 b) respectives de chaque moule viennent se rejoindre.

**8.** Dispositif selon la revendication 8, **caractérisé en ce que** la cheminée (4) comprend quatre ou cinq segments et qu'au moins un des éléments (2) de support des parties mâles (1a) est traversé par un segment particulier de la cheminé avec lequel l'élément de support est solidarisé.

**9.** Dispositif selon une des revendications précédentes, **caractérisé en ce que** le dispositif possède au moins un système robotisé (9) qui comprend d'une part au moins un moyen de positionnement (10) de l'étiquette dans la matrice (1b) du moule (1), le moyen de positionnement (10) étant orienté vers l'extérieur du dispositif comme les poinçons (1a), et d'autre part au moins un moyen de récupération (11), au niveau du poinçon (1a), du produit (13) fabriqué, le moyen de récupération (11) étant orienté vers l'intérieur du dispositif, de sorte que lorsque le système robotisé (9) vient se positionner entre les deux parties (1a et 1b) d'un même moule (1), le moyen de positionnement (10) fait face à la matrice (1a) du moule (1) et le moyen de récupération (11) fait face au poinçon (1 b) du moule (1).

**10.** Dispositif selon la revendication 10, **caractérisé en ce que** le moyen de positionnement (10) de l'étiquette est formé par un élément isolant entrainé en rotation, de forme similaire au poinçon (1a) du moule (1), destiné à enrouler une étiquette I.M.L. provenant d'un magasin et à la charger électro-statiquement grâce à des électrodes avant de venir positionner l'étiquette dans la matrice (1 b) où l'étiquette vient se coller sur la surface de la matrice (1 b) du moule (1).

**11.** Dispositif selon la revendication 10 ou 11, **caractérisé en ce que** le moyen de récupération (11) du produit (12) fabriqué au niveau du poinçon (1a) du moule (1) est formé par des doigts de préhension qui retirent le produit (12) fabriqué du poinçon (1a) du moule (1) pour le déposer vers une unité de stockage.

**12.** Dispositif selon la revendication 10 ou 11, **caractérisé en ce que** le moyen de récupération (11) du produit (12) fabriqué au niveau du poinçon (1a) du moule (1) est formé par une ventouse associée à un dispositif de succion automatisé qui retire le produit (12) fabriqué du poinçon (1a) du moule (1) pour le déposer vers une unité de stockage.

**13.** Dispositif selon une des revendications précédentes,
**caractérisé en ce que** les extrémités de chacun des segments (4a et 4b) qui assurent la jonction pour former la cheminée (4), sont constitués par des obturateurs qui d'une part assurent la fermeture de chacun des segments (4a et 4b) lorsque la cheminée n'est pas formée grâce à une pression pneumatique, mécanique ou hydraulique, et d'autre part s'ouvrent sous l'effet de la pression exercée par l'alimentation en matière lorsque cette pression est supérieure à la pression pneumatique de fermeture.

**14.** Dispositif selon une des revendications précédentes,
**caractérisé en ce que** le dispositif comprend un système permettant la formation d'un jet de gaz qui débouche au niveau du poinçon (1a) du moule, en vis-à-vis de la busette (5) d'injection de matière par une fente (f) située en périphérie ou sur une face du poinçon (1a), permettant au produit (12) fabriqué d'être éjecté du moule (1).

**15.** Dispositif selon une des revendications précédentes,
**caractérisé en ce que** le dispositif comprend une pluralité de moules (1) disposés par paires en étages et symétriquement par rapport à l'élément de support (2) des parties mâles (1 a).

**16.** Procédé de production de récipients de type barquette ou gobelet faisant intervenir la technologie « In-Mould Labelling » comprenant au moins :
- une étape de chargement d'au moins une étiquette,
- une étape de positionnement d'au moins une étiquette prédécoupée ou découpée dans au moins une partie (1 b) d'un moule (1),
- une étape d'injection d'au moins un composé dans le moule (1) reformé,
- une étape de séparation des différentes parties (1a et 1b) du moule (1) permettant
- une étape de démoulage d'au moins un produit (12) moulé, le produit moulé (12) étant alors positionné sur au moins une partie (1a) du moule (1),
- une étape d'évacuation d'au moins un produit (12) moulé récupéré.
**caractérisé en ce que** le procédé comporte en outre une étape de réunion d'au moins deux parties (1a et 1 b) d'un moule (1), cette réunion permettant la fermeture du moule (1) et la formation de la cheminée (4) de distribution de la matière à mouler vers les deux éléments (3) extérieurs de la structure du dispositif portant les parties femelles (1b) des moules (1),.

**17.** Procédé de production selon la revendication 17, **caractérisé en ce que en ce que** l'étape de positionnement d'au moins une étiquette s'effectue sur une partie (1 b) du moule (1) différente de la partie (1a) du moule (1) où l'étape de démoulage du produit (12) moulé est réalisée.

**18.** Procédé de production selon les revendications 17 ou 18, **caractérisé en ce que** l'étape de démoulage d'au moins un produit (12) moulé lors du cycle de production, s'effectue simultanément avec l'étape de positionnement d'au moins une étiquette du cycle de production suivant.

**19.** Procédé de production selon l'une des revendications 17 à 19, **caractérisé en ce que** l'étape de positionnement d'au moins une étiquette s'effectue sur la partie du moule formant la partie femelle (1 b) du moule (1) ou matrice, l'étape de démoulage d'au moins un produit (12) moulé se faisant sur la partie du moule (1) formant la partie mâle (1) ou poinçon.

**20.** Procédé de production selon une des revendications 17 à 20, **caractérisé en ce que** l'étape de démoulage d'au moins un produit (12) moulé comprend au moins :
- une étape d'éjection du produit (12) moulé par production d'un jet de gaz depuis la surface de la partie (1a) du moule (1) sur laquelle est positionné le produit (12) moulé,
- une étape de récupération du produit (12) moulé par un dispositif de préhension (11) adapté.
